(19) Europäisches Patentamt / European Patent Office / Office européen des brevets

(11) **EP 3 561 791 A1**

(12) **DEMANDE DE BREVET EUROPEEN**

(43) Date de publication:
**30.10.2019   Bulletin 2019/44**

(21) Numéro de dépôt: **19170905.4**

(22) Date de dépôt: **24.04.2019**

(51) Int Cl.:
*G08G 1/01* (2006.01)        *G06F 3/00* (2006.01)
*G06K 9/00* (2006.01)        *G06T 7/00* (2017.01)
*G08G 1/04* (2006.01)        *G08G 1/052* (2006.01)
*H04N 7/18* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité:  **26.04.2018   FR 1853670**

(71) Demandeur: **Transdev Group**
**92130 Issy les Moulineaux (FR)**

(72) Inventeurs:
• **KARAOGUZ, Cem**
  **78280 GUYANCOURT (FR)**
• **SMAL, Jean-Christophe**
  **92800 PUTEAUX (FR)**
• **NGUYEN, Kien-Cuong**
  **92160 ANTONY (FR)**
• **BEAUVILLAIN, Alexis**
  **91300 MASSY (FR)**

(74) Mandataire: **Lavoix**
**2, place d'Estienne d'Orves**
**75441 Paris Cedex 09 (FR)**

(54) **SYSTÈME DE SURVEILLANCE DE LA CIRCULATION ROUTIÈRE AVEC AFFICHAGE D'UNE IMAGE VIRTUELLE D'OBJETS MOBILES ÉVOLUANT DANS UNE PORTION D'INFRASTRUCTURE ROUTIÈRE**

(57)     Ce système de surveillance (10) comprend un système de capteur (20) pour capturer à un instant de capture des informations relatives à des objets mobiles (14) évoluant dans une portion d'infrastructure routière (12), et un poste de contrôle (30) comprenant un afficheur (32) pour afficher à un instant d'affichage postérieur à l'instant de capture une vue (34) de la portion d'infrastructure routière (12) sur laquelle est visible une image (36) de chaque objet mobile (14).

Le système de surveillance (10) comprend également au moins un premier calculateur (24) pour déduire des informations capturées une position et une vitesse mesurées de chaque objet mobile (14) à l'instant de capture, et un deuxième calculateur (42) pour déduire de la position et de la vitesse mesurées une position estimée de chaque objet mobile (14) à l'instant d'affichage. L'afficheur (32) est configuré pour afficher dans la vue (34) de la portion d'infrastructure routière (12) une image virtuelle (44) de chaque objet mobile (14) au niveau de sa position estimée.

FIG.1

EP 3 561 791 A1

## Description

La présente invention concerne un système de surveillance de la circulation dans une portion d'infrastructure routière, du type comprenant un système de capteur pour capturer à un instant de capture au moins une information relative à au moins un objet mobile évoluant dans la portion d'infrastructure routière, et un poste de contrôle comprenant un afficheur pour afficher à un instant d'affichage postérieur à l'instant de capture, sur la base de la ou chaque information capturée par le système de capteur, une vue de la portion d'infrastructure routière sur laquelle est visible une image du ou de chaque objet mobile évoluant dans ladite portion d'infrastructure routière.

L'invention concerne également un procédé de surveillance de la circulation dans une portion d'infrastructure routière, du type comprenant les étapes suivantes :

- capture, à un instant de capture, d'au moins une information relative à au moins un objet mobile évoluant dans la portion d'infrastructure routière, et
- affichage, dans un poste de contrôle, à un instant d'affichage postérieur à l'instant de capture, sur la base de la ou chaque information capturée, d'une vue de la portion d'infrastructure routière sur laquelle est visible le ou chaque objet mobile évoluant dans ladite portion d'infrastructure routière.

Des systèmes de surveillance de la circulation du type précité sont connus. Ils permettent à des opérateurs installés dans le poste de contrôle de surveiller certaines portions d'une infrastructure routière, telles que des carrefours ou des intersections. Ces opérateurs peuvent ainsi prendre des mesures appropriées de régulation du trafic en cas de problèmes survenant dans l'une des portions surveillées.

A cet effet, les systèmes de surveillance connus comprennent généralement des caméras capturant des images de la portion d'infrastructure routière et fournissant ces images au poste de contrôle sous la forme d'un flux vidéo qui, une fois affiché, constitue la vue de la portion d'infrastructure routière.

Les systèmes connus ne donnent cependant pas entière satisfaction. En effet, les postes de contrôle sont souvent éloignés des portions d'infrastructure qui y sont surveillées, et le temps de latence est généralement long entre l'instant de capture où une caméra capture une image d'une portion d'infrastructure routière et l'instant d'affichage où cette image est affichée dans le poste de contrôle comme vue de ladite portion d'infrastructure. Ce retard dans l'information parvenant au poste de contrôle peut empêcher les opérateurs en place de prendre les décisions adéquates.

Un objectif de l'invention est ainsi de fournir à un opérateur opérant dans le poste de contrôle d'un système de surveillance de circulation routière une information actualisée reflétant le plus fidèlement possible l'état de la circulation dans une portion d'infrastructure routière tel qu'il se présente au moment où l'information parvient à l'opérateur. Un autre objectif est de fournir cette information sous une forme intelligible rapidement et nécessitant peu de ressources cognitives pour être interprétée.

A cet effet, l'invention a pour objet un système de surveillance du type précité, comprenant au moins un premier calculateur pour déduire de la ou chaque information capturée par le système de capteur une position mesurée et une vitesse mesurée du ou de chaque objet mobile à l'instant de capture, et un deuxième calculateur pour déduire de la position et de la vitesse mesurées une position estimée du ou de chaque objet mobile à l'instant d'affichage, l'afficheur étant configuré pour afficher dans la vue de la portion d'infrastructure routière une image virtuelle du ou de chaque objet mobile au niveau de sa position estimée.

Selon des modes de réalisation particuliers de l'invention, le système de surveillance présente également l'une ou plusieurs des caractéristiques suivantes, prise(s) isolément ou suivant toute(s) combinaison(s) techniquement possible(s) :

- le système de capteur comprend au moins une caméra configurée pour capturer à l'instant de capture une image de la portion d'infrastructure routière et du ou de chaque objet mobile évoluant dedans, ladite image constituant une information relative audit ou à chacun desdits objet(s) mobile(s) ;
- le système de capteur comprend au moins un radar et/ou au moins un LIDAR configuré(s) pour capturer à l'instant de capture un écho radar, respectivement un écho LIDAR, du ou de chaque objet mobile évoluant dans la portion d'infrastructure routière, ledit écho radar, respectivement ledit écho LIDAR, constituant une information relative audit ou à chacun desdits objet(s) mobile(s) ;
- l'image capturée par la caméra à l'instant de capture constitue la vue de la portion d'infrastructure routière ;
- la caméra est configurée pour capturer des images de la portion d'infrastructure routière à une fréquence prédéterminée, l'afficheur étant configuré pour rafraîchir la vue de la portion d'infrastructure routière à une fréquence supérieure ou égale à ladite fréquence prédéterminée ;
- le premier calculateur est configuré pour déduire la position mesurée et la vitesse mesurée du ou de chaque objet mobile par comparaison de l'image capturée par la caméra à l'instant de capture avec une image de la portion d'infrastructure routière capturée antérieurement par la caméra ;
- la caméra est fixe relativement à la portion d'infrastructure routière ;
- l'image virtuelle est affichée en surimpression sur la vue de la portion d'infrastructure routière ;
- le premier calculateur est inclus dans le système de capteur ; et

- le deuxième calculateur est inclus dans le poste de contrôle.

L'invention a également pour objet un procédé de surveillance du type précité, comprenant également les étapes suivantes :

- calcul, à partir de la ou chaque information capturée, d'une position mesurée et d'une vitesse mesurée du ou de chaque objet mobile à l'instant de capture,
- déduction, à partir de la position et de la vitesse mesurées, d'une position estimée du ou de chaque objet mobile à l'instant d'affichage, et
- affichage, dans la vue de la portion d'infrastructure routière, d'une image virtuelle du ou de chaque objet mobile au niveau de sa position estimée.

Selon des modes de réalisation particuliers de l'invention, le procédé de surveillance présente également l'une ou plusieurs des caractéristiques suivantes, prise(s) isolément ou suivant toute(s) combinaison(s) techniquement possible(s) :

- la capture d'information comprend la capture d'une image de la portion d'infrastructure routière ;
- la capture d'information comprend, de manière synchrone avec la capture d'image, la capture d'un écho radar et/ou LIDAR du ou de chaque objet mobile évoluant dans la portion d'infrastructure routière ;
- l'image capturée constitue la vue de la portion d'infrastructure routière ;
- le calcul des position et vitesse mesurées comprend les sous-étapes suivantes :

    ◦ comparaison de l'image capturée à l'instant de capture avec une image de la portion d'infrastructure routière capturée antérieurement, et
    ◦ déduction, à partir de cette comparaison, de la position mesurée et de la vitesse mesurée du ou de chaque objet mobile ;

- les position et vitesse mesurées sont déduites des derniers échos radar et/ou LIDAR du ou de chaque objet mobile ;
- l'image virtuelle est affichée en surimpression sur la vue de la portion d'infrastructure routière ; et
- les étapes de capture, calcul, déduction et affichage sont répétées à une fréquence prédéterminée.

D'autres caractéristiques et avantages de l'invention apparaîtront à la lecture de la description qui va suivre, donnée uniquement à titre d'exemple et faite en se référant aux dessins annexés, dans lesquels :

- la Figure 1 est une vue schématique d'un système de surveillance selon l'invention, et
- la Figure 2 est un diagramme en blocs illustrant un procédé de surveillance mis en oeuvre par le système de surveillance de la Figure 1.

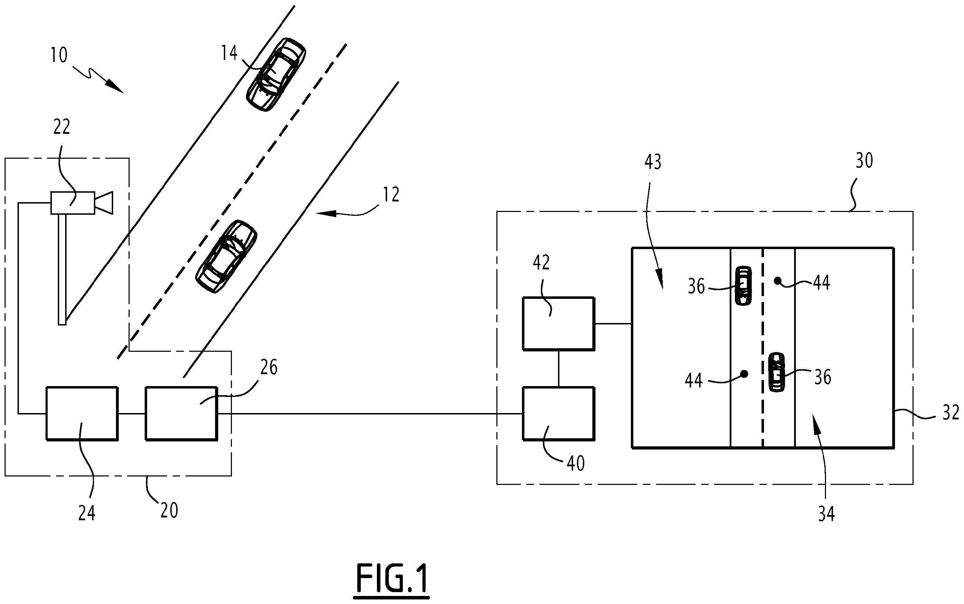

Le système de surveillance 10 représenté sur la Figure 1 est destiné à la surveillance de la circulation dans une portion d'infrastructure routière 12, constituée ici par une simple route. En variante, la portion d'infrastructure routière 12 est constituée par un carrefour ou une intersection.

La circulation dans la portion d'infrastructure routière 12 est constituée par le déplacement d'au moins un objet mobile 14 évoluant dans ladite portion d'infrastructure 12. Dans l'exemple représenté, cette circulation est constituée par le déplacement de plusieurs objets mobiles 14, ici deux, à l'intérieur de la portion d'infrastructure 12, chaque objet mobile 14 étant constitué par un véhicule automobile. En variante, au moins un des objets mobiles 14 est constitué par un autre type d'usager de la route, par exemple un piéton ou un cycliste.

Pour surveiller cette circulation, le système de surveillance 10 comprend un système de capteur 20 pour capturer à des instants de capture au moins une information relative à chaque objet mobile 14.

Ce système de capteur 20 est disposé à proximité de la portion d'infrastructure 12.

Une première information relative à chaque objet mobile 14 que le système de capteur 20 est apte à capturer est constituée par une image dudit objet mobile 14. A cet effet, le système de capteur 20 comprend une caméra 22.

La caméra 22 est fixe relativement à la portion d'infrastructure 12.

La caméra 22 est adaptée pour capturer des images dans le spectre visible. Elle présente un champ de vision englobant la portion d'infrastructure 12 et est donc adaptée pour capturer des images dans le spectre visible de la portion d'infrastructure 12, chaque image incluant une image du ou de chaque objet mobile 14 évoluant alors dans la portion d'infrastructure 12.

La caméra 22 est en particulier configurée pour capturer ces images à une fréquence prédéterminée, typiquement comprise entre 10 et 60 Hz.

Optionnellement, le système de capteur 20 est apte à capturer d'autres informations relatives à chaque objet mobile 14, telles qu'au moins une autre image, une image infrarouge, un écho radar ou un écho LIDAR de l'objet mobile 14, ces informations étant capturées de manière synchrone avec les images capturées par la caméra 22. A cet effet, le système de capteur 20 comprend également au moins une autre caméra vidéo, une caméra infrarouge, un radar et/ou un LIDAR (non représentés) configuré(s) pour capturer les informations précitées à l'instant de capture.

Le système de capteur 20 comprend encore un premier calculateur 24 pour déduire de la ou chaque information capturée par le système de capteur 20 une position mesurée et une vitesse mesurée de chaque objet mobile 14 à l'instant de capture.

Le premier calculateur 24 est configuré pour actualiser ces position et vitesse mesurées à une fréquence sensiblement égale à la fréquence prédéterminée.

Ici, le premier calculateur 24 est configuré pour déduire ces position et vitesse mesurées par comparaison de l'image capturée par la caméra 22 à l'instant de capture le plus récent avec la précédente image de la portion d'infrastructure routière 12 capturée par la caméra 22. A cet effet, le premier calculateur 24 est configuré, de manière connue, pour mettre en oeuvre une suite d'étapes de traitement d'images comprenant typiquement :

- un prétraitement des images, avec par exemple filtrage de chaque image,
- une détection d'objet, typiquement par soustraction d'arrière-plan ou par apprentissage machine, et
- un suivi d'objet.

En variante (non représentée), le premier calculateur 24 est configuré pour déduire ces position et vitesse mesurées par analyse des derniers échos radar et/ou LIDAR du ou de chaque objet mobile 14 capturés par le système de capteur 20.

Le premier calculateur 24 est typiquement réalisé sous la forme d'un logiciel stocké dans une mémoire (non représentée) et apte à être exécuté par un processeur (non représenté) associé à ladite mémoire, la mémoire et le processeur formant ensemble une unité de traitement d'informations incluse dans le système de capteur 20. En variante, le premier calculateur 24 est réalisé sous la forme d'un composant logique programmable ou sous la forme d'un circuit intégré dédié inclus dans le système de capteur 20.

Le système de capteur 20 comprend enfin un système de communication 26 apte à diffuser hors du système de capteur 20 les images capturées par la caméra 22, ainsi que les position et vitesse mesurées de chaque objet mobile 14. A cet effet, le système de communication 26 est configuré pour mettre en oeuvre un protocole de communication prédéterminé, par exemple un protocole de communication TCP, IP ou UDP. Optionnellement, le système de communication 26 est configuré pour transmettre des données par voie aérienne.

Le système de surveillance 10 comprend également un poste de contrôle 30 distant, situé à distance de la portion d'infrastructure 12, pour le contrôle de la portion d'infrastructure 12 par un opérateur. Ce poste de contrôle 12 comprend un afficheur 32 pour afficher une vue 34 de la portion d'infrastructure routière 12 sur laquelle est visible une image 36 de chaque objet mobile 14.

Le poste de contrôle 30 est configuré pour que la vue 34 soit basée sur la ou chaque information capturée par le système de capteur 20. En particulier, le poste de contrôle 30 est ici configuré pour que la vue 34 soit constituée par une image de la portion d'infrastructure 12 capturée par la caméra 22 ; ainsi, l'image 36 est une image réelle de chaque objet mobile 14, constituée par l'image dudit objet mobile 14 capturée par la caméra 22 à un instant de capture.

A cet effet, le poste de contrôle 30 est configuré pour recevoir les images capturées par la caméra 22, ainsi que les positions et vitesses mesurées de chaque objet mobile 14. Il comprend donc un dispositif de communication 40 compatible avec le système de communication 26, c'est-à-dire mettant en oeuvre le protocole de communication prédéterminé utilisé par le système de communication 26.

Le poste de contrôle 30 est en particulier configuré pour que la vue 34 soit constituée par la dernière image de la portion d'infrastructure 12 reçue par le dispositif de communication 40.

Du fait du temps de transfert des données entre le système de communication 26 et le dispositif de communication 40, et du temps de traitement des données par le système le système de capteur 20 et par le poste de contrôle 30, l'afficheur 32 est configuré pour afficher la vue 34 à un instant d'affichage postérieur à l'instant de capture de ladite vue 34 par la caméra 22, avec un retard par rapport audit instant de capture.

Ce retard est susceptible de causer des erreurs d'appréciation de la part de l'opérateur contrôlant la portion d'infrastructure 12. Afin d'éviter de telles erreurs d'appréciation, le poste de contrôle 30 est adapté pour fournir à l'opérateur une information enrichie par rapport à la simple vue 34.

A cet effet, le poste de contrôle 30 comprend un deuxième calculateur 42 configuré pour calculer le retard entre les instants d'affichage et de capture et déduire de ce retard, ainsi que des dernières position et vitesse mesurées reçues par le dispositif de communication 40, une position estimée de chaque objet mobile 14 à l'instant d'affichage. Pour ce faire, le deuxième calculateur 42 est configuré pour mettre en oeuvre l'algorithme suivant :

$$p_{est} = p_{mes} + \Delta t \times v$$

où $p_{est}$ est la position estimée, $p_{mes}$ est la dernière position mesurée reçue par le dispositif de communication 40, $\Delta t$ est le retard calculé, et $v$ est la vitesse mesurée.

Le deuxième calculateur 42 est typiquement réalisé sous la forme d'un logiciel stocké dans une mémoire (non représentée) et apte à être exécuté par un processeur (non représenté) associé à ladite mémoire, la mémoire et le processeur formant ensemble une unité de traitement d'informations incluse dans le poste de contrôle 30. En variante, le deuxième calculateur 42 est réalisé sous la forme d'un composant logique programmable ou sous la forme d'un circuit intégré dédié inclus dans le poste de contrôle 30.

Le deuxième calculateur 42 est également configuré pour recevoir la vue 34 de la portion d'infrastructure routière 12, créer une vue enrichie 43 intégrant dans la vue 34 une image virtuelle 44 de chaque objet mobile 14 au niveau de sa position estimée, et transmettre cette vue enrichie 43 à l'afficheur 32 pour son affichage. Le deuxième calculateur 42 est configuré pour que l'image virtuelle 44 apparaisse dans la vue 43 de manière non réaliste, de sorte à permettre à l'opérateur de distinguer aisément l'image virtuelle 44 de l'image réelle 36.

L'afficheur 32 est ainsi configuré pour afficher dans la vue 34 de la portion d'infrastructure routière 12, en surimpression sur ladite vue 34, l'image virtuelle 44 de chaque objet mobile 14 au niveau de sa position estimée.

Le deuxième calculateur 42 est encore configuré pour actualiser le calcul de la position estimée à une fréquence d'affichage supérieure ou égale à ladite fréquence prédéterminée, et pour actualiser la vue enrichie 43 à une fréquence sensiblement égale à ladite fréquence d'affichage. L'afficheur 32 est quant à lui configuré pour rafraîchir son affichage à la fréquence d'affichage, de sorte à afficher la vue 43, à chaque rafraîchissement, à un nouvel instant d'affichage, le deuxième calculateur 42 étant configuré pour utiliser ce nouvel instant d'affichage dans le calcul du retard dont est déduit la position estimée.

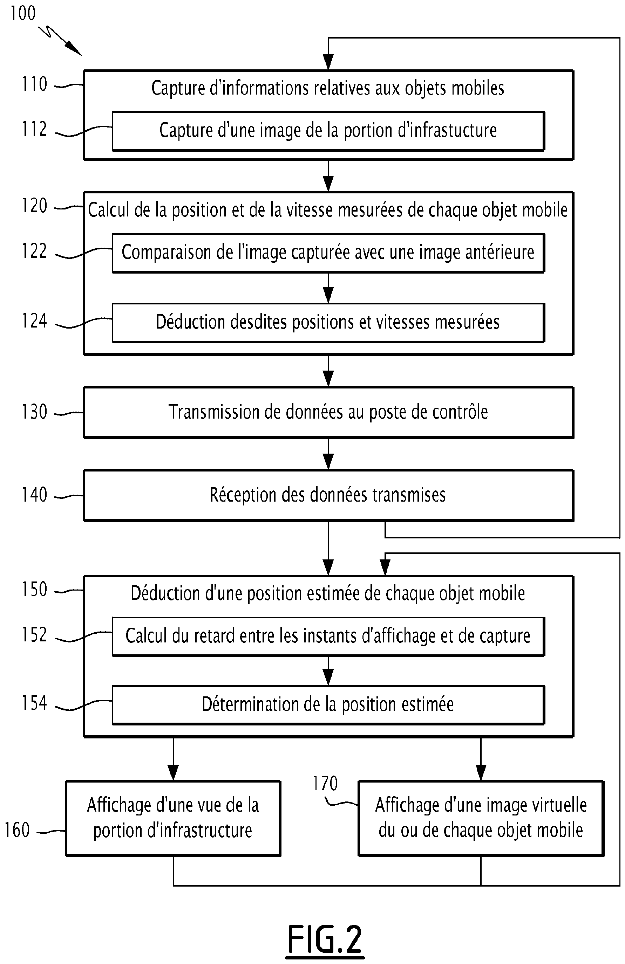

Un procédé 100 de surveillance de la circulation d'infrastructure routière 12, mis en oeuvre par le système de surveillance 10, va maintenant être décrit, en référence à la Figure 2.

Ce procédé 100 comprend une première étape 110 de capture, à un instant de capture, d'au moins une information relative à chaque objet mobile 14 évoluant dans la portion d'infrastructure 12. Cette étape 110 comprend la capture 112, à un instant de capture, d'une image de la portion d'infrastructure 12 par la caméra 22. Optionnellement, l'étape 110 comprend également une sous-étape (non représentée), synchrone avec la sous-étape 112, de capture d'au moins une autre information telle qu'au moins une autre image, une image infrarouge, un écho radar ou un écho LIDAR dudit objet mobile 14.

L'étape 110 est suivie d'une étape 120 de calcul, par le premier calculateur 24, de la position mesurée et de la vitesse mesurée de chaque objet mobile 14 à l'instant de capture.

L'étape 120 comprend ici la comparaison 122 de l'image capturée à l'instant de capture avec une image de la portion d'infrastructure routière 12 capturée antérieurement, puis la déduction 124, à partir de cette comparaison 122, de la position mesurée et de la vitesse mesurée de chaque objet mobile 14. L'étape 120 comprend encore le stockage 126 de l'image capturée à l'instant de capture pour son utilisation comme image capturée antérieurement lors de la prochaine répétition de l'étape 120.

L'étape de déduction 124 comprend typiquement les sous-étapes suivantes (non représentées) :

- prétraitement des images, avec par exemple filtrage de chaque image,
- détection d'objet, typiquement par soustraction d'arrière-plan ou par apprentissage machine, et
- suivi d'objet.

Dans le cas (non représenté) où le système de capteur 20 comprend un radar, l'étape 120 comprend la mesure de la position et de la vitesse de chaque objet mobile 14 au moyen de l'écho radar dudit objet mobile 14.

Dans le cas (non représenté) où le système de capteur 20 comprend un LIDAR, l'étape 120 comprend la comparaison d'un écho LIDAR capturé à l'instant de capture avec un écho LIDAR capturé antérieurement, puis la déduction, à partir de cette comparaison, de la position mesurée et de la vitesse mesurée de chaque objet mobile 14, avant le stockage de l'écho LIDAR capturé à l'instant de capture pour son utilisation comme écho capturé antérieurement lors de la prochaine répétition de l'étape 120.

L'étape 120 est elle-même suivie d'une étape 130 de transmission, par le système de communication 26, de l'image de la portion d'infrastructure 12, de la position mesurée et de la vitesse mesurée au poste de contrôle 30.

Ces étapes 110, 120, 130 surviennent pendant l'instant de capture et sont répétées à la fréquence prédéterminée.

Le procédé 100 comprend encore une étape 140 de réception, par le dispositif de communication 40, des données transmises. Cette étape 140 fait suite à l'étape de transmission 130, après un délai de transmission, et survient à un instant d'affichage.

L'étape 140 est suivie d'une étape 150 de déduction, par le deuxième calculateur 42, d'une position estimée de chaque objet mobile 14 à l'instant d'affichage. Cette étape 150 comprend le calcul 152, par le deuxième calculateur 42, du retard entre les instants d'affichage et de capture, puis la détermination 154 de la position estimée à partir dudit retard calculé et des dernières positions et vitesses mesurées reçues par le dispositif de communication 40, par application de l'algorithme présenté ci-dessus.

L'étape 150 est elle-même suivie d'une étape 160 d'affichage, par l'afficheur 32, de la vue 34, cette vue 34 étant ici constituée par la dernière image de la portion d'infrastructure 12 reçue par le dispositif de communication 40.

Le procédé 100 comprend encore une étape 170 d'affichage, dans la vue 34 et en surimpression sur ladite vue 34, de l'image virtuelle 44 de chaque objet mobile 14 au niveau de sa position estimée. Cette étape 170 est sensiblement simultanée avec l'étape d'affichage 160.

Ces étapes 140, 150, 160, 170 surviennent pendant l'instant d'affichage. L'étape 140 est répétée avec les étapes 110, 120, 130 à la fréquence prédéterminée. Les étapes 150, 160, 170 sont quant à elles répétées à la fréquence d'affichage.

On notera que les étapes 110, 120, 130, 140, 150, 160, 170 du procédé 100 ne sont pas instantanées. Par conséquent, le terme « instant » utilisé ci-dessus et dans les revendications n'est pas à comprend comme désignant un moment ponctuel dans le temps, mais simplement un moment qui est significativement plus bref que le délai de transmission des données entre le système de capture 20 et le poste de contrôle 30.

Dans une variante non représentée de l'invention, le premier calculateur 24 est inclus dans le poste de contrôle 30 au lieu d'être inclus dans le système de capteur 20. Dans cette variante, les données transmises du système de capteur 20 au poste de contrôle 30 sont exclusivement constituées par la ou chaque information, dont l'image de la portion d'infrastructure 12, capturée par le système de capteur 20. En outre, l'étape 120 survient alors après les étapes 130 et 140, pendant l'instant d'affichage et non lors de l'instant de capture; l'étape 120 continue cependant d'être répétée à la fréquence prédéterminée.

Grâce à l'invention décrite ci-dessus, l'opérateur du poste de contrôle 30 dispose ainsi d'une vue enrichie de la portion d'infrastructure 12 lui permettant de mieux appréhender l'état de la circulation dans la portion d'infrastructure 12 au moment où il la surveille. L'opérateur peut donc prendre des décisions de gestion du trafic mieux adaptées à cet état.

En outre, cette vue est présentée à l'opérateur sous une forme lui permettant d'appréhender aisément les informations qui lui sont fournies, l'opérateur pouvant en particulier distinguer facilement les données réelles des données estimées et donc incertaines.

## Revendications

**1.** Système (10) de surveillance de la circulation dans une portion d'infrastructure routière (12), comprenant un système de capteur (20) pour capturer à un instant de capture au moins une information relative à au moins un objet mobile (14) évoluant dans la portion d'infrastructure routière (12), et un poste de contrôle (30) comprenant un afficheur (32) pour afficher à un instant d'affichage postérieur à l'instant de capture, sur la base de la ou chaque information capturée par le système de capteur (20), une vue (34) de la portion d'infrastructure routière (12) sur laquelle est visible une image (36) du ou de chaque objet mobile (14) évoluant dans ladite portion d'infrastructure routière (12), **caractérisé en ce que** le système de surveillance (10) comprend au moins un premier calculateur (24) pour déduire de la ou chaque information capturée par le système de capteur (20) une position mesurée et une vitesse mesurée du ou de chaque objet mobile (14) à l'instant de capture, et un deuxième calculateur (42) pour déduire de la position et de la vitesse mesurées une position estimée du ou de chaque objet mobile (14) à l'instant d'affichage, l'afficheur (32) étant configuré pour afficher dans la vue (34) de la portion d'infrastructure routière (12) une image virtuelle (44) du ou de chaque objet mobile (14) au niveau de sa position estimée.

**2.** Système de surveillance (10) selon la revendication 1, dans lequel le système de capteur (20) comprend au moins une caméra (22) configurée pour capturer à l'instant de capture une image de la portion d'infrastructure routière (12) et du ou de chaque objet mobile (14) évoluant dedans, ladite image constituant une information relative audit ou à chacun desdits objet(s) mobile(s) (14).

**3.** Système de surveillance (10) selon la revendication 2, dans lequel le système de capteur (20) comprend au moins un radar et/ou au moins un LIDAR configuré(s) pour capturer à l'instant de capture un écho radar, respectivement un écho LIDAR, du ou de chaque objet mobile (14) évoluant dans la portion d'infrastructure routière (12), ledit écho radar, respectivement ledit écho LIDAR, constituant une information relative audit ou à chacun desdits objet(s) mobile(s) (14).

**4.** Système de surveillance (10) selon la revendication 2 ou 3, dans lequel l'image capturée par la caméra (22) à l'instant de capture constitue la vue (34) de la portion d'infrastructure routière (12).

**5.** Système de surveillance (10) selon l'une quelconque des revendications 2 à 4, dans lequel la caméra (22) est configurée pour capturer des images de la portion d'infrastructure routière (12) à une fréquence prédéterminée, l'afficheur (32) étant configuré pour rafraîchir la vue (34) de la portion d'infrastructure routière (12) à une fréquence supérieure ou égale à ladite fréquence prédéterminée.

**6.** Système de surveillance (10) selon la revendication 5, dans lequel le premier calculateur (24) est configuré pour déduire la position mesurée et la vitesse mesurée du ou de chaque objet mobile (14) par comparaison de l'image capturée par la caméra (22) à l'instant de capture avec une image de la portion d'infrastructure routière (12) capturée antérieurement par la caméra (22).

**7.** Système de surveillance (10) selon l'une quelconque des revendications 2 à 6, dans lequel la caméra (22) est fixe relativement à la portion d'infrastructure routière (12).

**8.** Système de surveillance (10) selon l'une quelconque des revendications précédentes, dans lequel l'image virtuelle (44) est affichée en surimpression sur la vue (34) de la portion d'infrastructure routière (12).

9.    Système de surveillance (10) selon l'une quelconque des revendications précédentes, dans lequel le premier calculateur (24) est inclus dans le système de capteur (20).

10.   Système de surveillance (10) selon l'une quelconque des revendications précédentes, dans lequel le deuxième calculateur (42) est inclus dans le poste de contrôle (30).

11.   Procédé (100) de surveillance de la circulation dans une portion d'infrastructure routière (12), comprenant les étapes suivantes :

    - capture (110), à un instant de capture, d'au moins une information relative à au moins un objet mobile (14) évoluant dans la portion d'infrastructure routière (12), et
    - affichage (160), dans un poste de contrôle (30), à un instant d'affichage postérieur à l'instant de capture, sur la base de la ou chaque information capturée, d'une vue (34) de la portion d'infrastructure routière (12) sur laquelle est visible le ou chaque objet mobile (14) évoluant dans ladite portion d'infrastructure routière (12),

    **caractérisé en ce que** le procédé de surveillance (100) comprend également les étapes suivantes :

    - calcul (120), à partir de la ou chaque information capturée, d'une position mesurée et d'une vitesse mesurée du ou de chaque objet mobile (14) à l'instant de capture,
    - déduction (150), à partir de la position et de la vitesse mesurées, d'une position estimée du ou de chaque objet mobile (14) à l'instant d'affichage, et
    - affichage (160), dans la vue (34) de la portion d'infrastructure routière (12), d'une image virtuelle (44) du ou de chaque objet mobile (14) au niveau de sa position estimée.

EP 3 561 791 A1

FIG.1

100

110 — | Capture d'informations relatives aux objets mobiles |
112 — | Capture d'une image de la portion d'infrastucture |

120 — | Calcul de la position et de la vitesse mesurées de chaque objet mobile |
122 — | Comparaison de l'image capturée avec une image antérieure |
124 — | Déduction desdites positions et vitesses mesurées |

130 — | Transmission de données au poste de contrôle |

140 — | Réception des données transmises |

150 — | Déduction d'une position estimée de chaque objet mobile |
152 — | Calcul du retard entre les instants d'affichage et de capture |
154 — | Détermination de la position estimée |

160 — | Affichage d'une vue de la portion d'infrastructure |

170 | Affichage d'une image virtuelle du ou de chaque objet mobile |

## FIG.2

**Europäisches Patentamt**

**European Patent Office**

**Office européen des brevets**

# RAPPORT DE RECHERCHE EUROPEENNE

Numéro de la demande

EP 19 17 0905

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2011/298928 A1 (CHEN BILLY [US] ET AL) 8 décembre 2011 (2011-12-08) * abrégé; figures 1, 2, 4 * * alinéas [0013], [0037] * * alinéa [0019] - alinéa [0027] * * alinéa [0031] - alinéa [0032] * ----- | 1-11 | INV. G08G1/01 G06F3/00 G06K9/00 G06T7/00 G08G1/04 G08G1/052 H04N7/18 |
| X | US 2016/065944 A1 (FUJII MIYUKI [JP] ET AL) 3 mars 2016 (2016-03-03) * abrégé; figures 1, 2, 8A, 8B * * alinéa [0023] - alinéa [0026] * * alinéas [0030], [0037] * * alinéa [0065] - alinéa [0073] * * alinéa [0086] - alinéa [0089] * ----- | 1-11 | |
| X | EP 1 262 933 A1 (SUMITOMO ELECTRIC INDUSTRIES [JP]) 4 décembre 2002 (2002-12-04) * abrégé; figures 1 - 5 * * alinéa [0020] - alinéa [0021] * * alinéa [0030] - alinéa [0034] * * alinéa [0043] - alinéa [0044] * ----- | 1-11 | |
| A | US 2009/237510 A1 (CHEN BILLY [US] ET AL) 24 septembre 2009 (2009-09-24) * le document en entier * * abrégé; figures 1 - 3 * * alinéa [0019] - alinéa [0023] * * alinéa [0028] - alinéa [0029] * * alinéa [0034] - alinéa [0038] * ----- | 1-11 | DOMAINES TECHNIQUES RECHERCHES (IPC)  G08G G06F G06T H04N G06K |
| A | US 2017/316693 A1 (KIM SUNG IL [KR]) 2 novembre 2017 (2017-11-02) * le document en entier * ----- | 1-11 | |
| A | EP 3 035 314 A1 (BE MOBILE NV [BE]) 22 juin 2016 (2016-06-22) * le document en entier * ----- | 1-11 | |

Le présent rapport a été établi pour toutes les revendications

| Lieu de la recherche | Date d'achèvement de la recherche | Examinateur |
|---|---|---|
| La Haye | 5 septembre 2019 | Berland, Joachim |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................
& : membre de la même famille, document correspondant

EPO FORM 1503 03.82 (P04C02)

**EP 3 561 791 A1**

## ANNEXE AU RAPPORT DE RECHERCHE EUROPEENNE
## RELATIF A LA DEMANDE DE BREVET EUROPEEN NO.

EP 19 17 0905

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-09-2019

| Document brevet cité au rapport de recherche | Date de publication | Membre(s) de la famille de brevet(s) | Date de publication |
|---|---|---|---|
| US 2011298928 A1 | 08-12-2011 | AU 2011261690 A1 | 13-12-2012 |
| | | CN 102907091 A | 30-01-2013 |
| | | EP 2577958 A2 | 10-04-2013 |
| | | JP 5815026 B2 | 17-11-2015 |
| | | JP 2013530463 A | 25-07-2013 |
| | | KR 20130077829 A | 09-07-2013 |
| | | RU 2012151489 A | 10-06-2014 |
| | | TW 201204021 A | 16-01-2012 |
| | | US 2011298928 A1 | 08-12-2011 |
| | | WO 2011153015 A2 | 08-12-2011 |
| US 2016065944 A1 | 03-03-2016 | JP 5865547 B2 | 17-02-2016 |
| | | JP WO2014148394 A1 | 16-02-2017 |
| | | US 2016065944 A1 | 03-03-2016 |
| | | WO 2014148394 A1 | 25-09-2014 |
| EP 1262933 A1 | 04-12-2002 | AT 294434 T | 15-05-2005 |
| | | DE 60019813 T2 | 06-10-2005 |
| | | EP 1262933 A1 | 04-12-2002 |
| | | ES 2237485 T3 | 01-08-2005 |
| | | HK 1047814 A1 | 24-06-2005 |
| | | JP 3601392 B2 | 15-12-2004 |
| | | JP 2001184586 A | 06-07-2001 |
| | | WO 0148724 A1 | 05-07-2001 |
| US 2009237510 A1 | 24-09-2009 | AU 2009226064 A1 | 24-09-2009 |
| | | BR PI0907785 A2 | 14-07-2015 |
| | | CA 2715897 A1 | 24-09-2009 |
| | | CN 101978394 A | 16-02-2011 |
| | | EP 2252975 A2 | 24-11-2010 |
| | | JP 2011515760 A | 19-05-2011 |
| | | KR 20100129745 A | 09-12-2010 |
| | | MY 154619 A | 15-07-2015 |
| | | RU 2010138614 A | 27-03-2012 |
| | | US 2009237510 A1 | 24-09-2009 |
| | | WO 2009117197 A2 | 24-09-2009 |
| | | ZA 201005838 B | 26-10-2011 |
| US 2017316693 A1 | 02-11-2017 | CN 108140231 A | 08-06-2018 |
| | | KR 101683588 B1 | 07-12-2016 |
| | | US 2017316693 A1 | 02-11-2017 |
| | | WO 2017188523 A1 | 02-11-2017 |
| EP 3035314 A1 | 22-06-2016 | EP 3035314 A1 | 22-06-2016 |
| | | WO 2016096226 A1 | 23-06-2016 |

EPO FORM P0460

Pour tout renseignement concernant cette annexe : voir Journal Officiel de l'Office européen des brevets, No.12/82